# EUROPEAN PATENT SPECIFICATION

(11) **EP 2 199 323 B1**
(45) Date of publication and mention of the grant of the patent: **13.04.2016**
(21) Application number: 10157841.7
(22) Date of filing: 27.09.2006
(51) Int. Cl.: C08G 18/10, C08J 7/04, C08L 75/04, A47F 3/04

(54) **Anti-frost film assemblies, method of manufacture, and articles made thereof**
Frostschutzfolienanordnungen, Verfahren zu deren Herstellung und damit hergestellte Artikel
Ensembles film antigivre, leur procédé de fabrication et articles ainsi obtenus

(30) Priority: 30.09.2005 US 241629; 22.09.2006 US 534427
(43) Date of publication of application: 23.06.2010
(62) Divisional of application: 06825328.5
(73) Proprietor: SABIC Global Technologies B.V., 4612 PX Bergen op Zoom (NL)
(72) Inventor: Borowiec, Matthew, Conway, MA 03141 (US); Laurin, Michael M, Pittsfield, MA 01201 (US); Vignovic, David M., Millvalley, CA 94941 (US); Hongladarom, Kwan, Mount Vernon, IN 47620 (US); Wood, Charlie W., Peru, MA 01235 (US)
(74) Representative: Stiebe, Lars Magnus

(56) References cited:
- WO-A-03/092448
- WO-A-2004/013063
- US-A1- 2005 064 101

## Description

### BACKGROUND OF INVENTION

This application relates to multilayer film assemblies useful to prevent frosting, their method of manufacture, and articles formed from the film assemblies.

When a cooler surface comes in contact with warmer moist air, condensation may occur on the cooler surface. Depending on temperature differences, the condensation may take the form of fog or frost on the surface and, particularly with substantially transparent surfaces, affect light transmission and impair visibility.

Anti-frost films find utility in a number of different applications. For example, the marketing and sales of refrigerated merchandise often includes consumer selection directly from the refrigerated unit. To ensure effective marketing, the items within the case should remain visible and discernible to a patron looking into the case through a light transmitting, usually substantially transparent, panel, or door. When a patron chooses an item and opens the door to the case, the door may frost due to condensation as the cool, inside surface of the door comes in contact with the moist, ambient atmosphere outside the case. Typically, this frost remains even after closing the door, and impairs the view into the case for subsequent patrons. The inability to see into the case can result in loss of sale for the store. In addition, increased energy costs may incur, as patrons hold the door open longer to see the items inside the case. One method used to reduce this problem includes a heated door that un-frosts the door after some length of time. These heated doors may be both expensive to purchase and costly to operate due to energy consumption to maintain the heated door, while the refrigerator is cooling/freezing the food inside the case. The lower the temperature within the case, the greater the costs of maintaining frost and frost resistant doors.

Another remedy is to provide anti-frost coatings. However, typical permanent anti-frost coatings do not provide effective frost resistance over a wide temperature gradient. Most noticeably, the lower temperature storage and display cases (0°C and below) often develop frost and frost and therefore do not achieve optimum visibility with current anti-frost coatings.

WO 2003/092448 discloses fog resistant coatings made of polyurethane that can prevent condensation under typical operation conditions of a refrigerator door, wherein the coating is applied directly on the substrate and then hardened at high temperature.

WO 2004/013063 discloses a two package coating agent for forming an antifogging film comprising a first component comprising an isocyanate component and a second component comprising at least one water-absorbing polyol, a hydrophobic polyol and a surfactant having a group reactive with the isocyanate group.

US 2005/0064101 discloses a vacuum glazing unit. In a first embodiment an antifrost absorbent that can be deposited directly on a glass. In a second embodiment it is taught an antifrosting absorbent layer deposited on a plastic film (e.g. polycarbonate). The plastic film may be fastened by adhesive bonding around the periphery. The air layer between the glass and the plastic film does not exceed 10 mm.

US 5,402,265 discloses a flexible fog free mirror device to be used under high humidity bathroom conditions.

Therefore, there is a need for new, low temperature anti-frost systems to enhance visibility into refrigerator and freezer cases by preventing or inhibiting frosting of the door when the door is exposed to cool air and then exposed to moist warmer air when opened.

### BRIEF DESCRIPTION OF THE INVENTION

A first aspect of the invention is an anti-frost film assembly for preventing condensation on a substrate comprising:
a transparent film having a first surface and a second surface opposite the first surface; and
a transparent anti-frost layer formed from a polyurethane-film forming composition effective to provide the layer with anti-frost properties when said substrate is alternatively held between -23°C and 0°C and then exposed to ambient air with a relative humidity of 40% to 70% at temperatures of 18 °C to about 30 °C for up to 2 minutes, wherein the anti-frost layer is disposed on an area of the first surface of the film;
wherein the polyurethane-film forming composition comprises a polyisocyanate prepolymer having reactive isocyanate groups, a hydrophilic polyol, and a hydroxyl-bearing surfactant having a hydrophilic region and a hydrophobic region;
an adhesive layer disposed on an area of the second surface of the transparent film, wherein said anti-frost assembly, with said adhesive layer, is optically clear, and
wherein said adhesive layer allows the anti-frost film assembly to be repositioned on the substrate.

In one embodiment, a condensation-resistant article comprises a transparent substrate having a first surface; and the above-described anti-frost film assembly wherein the second surface of the film is disposed on an area of the first surface of the substrate.

In one embodiment, a refrigerated panel comprises a transparent refrigerator panel having a first surface, and the above-described anti-frost film assembly, wherein the second surface of the film is disposed on an area of the first surface of the door panel.

In one embodiment, a method of producing an anti-frost film assembly useful for preventing condensation on a substrate comprising:
applying a transparent anti-frost layer formed from a polyurethane-film forming composition to a first surface of a transparent film;
wherein the polyurethane-film forming composition comprises a polyisocyanate prepolymer having reactive isocyanate groups, a hydrophilic polyol, and a hydroxyl-bearing surfactant having a hydrophilic region and a hydrophobic region;
and
applying an adhesive layer across a second surface of the film, said adhesive layer being selected so that said anti-frost assembly, with said adhesive layer, is optically clear and wherein said adhesive layer allows the anti-frost film assembly to be repositioned on a substrate;
wherein the transparent anti-frost layer is effective to provide the layer with anti-frost properties when the substrate is held at temperatures that alternate between -23°C and 0°C and then exposed to ambient air with a relative humidity of 40% to 70% at temperatures of 18 °C to about 30 °C for up to 2 minutes.

The above-described and other features will be appreciated and understood by those skilled in the art from the following detailed description, drawings, and appended claims.

### BRIEF DESCRIPTION OF THE DRAWINGS

Refer now to the figures, which are exemplary embodiments, and wherein the like elements are numbered alike.
Figure 1 is a schematic view of an exemplary anti-frost film assembly as disclosed herein.
Figure 2 is a schematic view of an exemplary embodiment of an anti-frost film assembly having an optional graphic component as disclosed herein.
Figure 3 is a schematic view of an exemplary article comprising an anti-frost film assembly and a substrate as disclosed herein.

### DETAILED DESCRIPTION

The anti-frost film assemblies disclosed herein are transparent, multilayer films useful in the production of condensation-resistant articles such as refrigerator and freezer doors (e.g., that are for exposure to temperatures below freezing) and panels, or reflective surface (e.g., bathroom mirrors), but they are not limited to these specific products or applications. The anti-frost properties of the film assemblies are effective at temperatures as low as about -17°C, or even about -23°C, without use of external heaters. These temperatures are significantly lower than those enabled by prior art antifrosting films. Since heaters are not required, use of such films can provide a significant energy savings. The assemblies are manufactured to be repositionable and/or, in an advantageous optional feature, to allow the inclusion of a graphic.

The anti-frost film assemblies comprise a substantially transparent anti-frost layer and a substantially transparent film. As used herein, "substantially transparent" refers to optical clarity, and means that enough light is transmitted through the layer(s) to allow visualization through the film assembly by an observer. Thus, while some haze or coloration may be present in the individual layer(s), such haze or coloration does not significantly interfere with visualization.

It has been shown by the inventors hereof that when this anti-frost film assembly is applied to a substrate, the formation of condensation (water droplets) on the substrate surface is reduced or prevented when the present assemblies are exposed to temperatures that alternate between about 65°C and about -23°C compared to other anti-frost solutions. While reference is made herein to "anti-frost film assembly," this term is merely for convenience in discussion, and it is to be understood that the term encompasses film assemblies used to prevent visual impairment due to the formation of water droplets and/or water crystals.

Substantially transparent anti-frost layers that are effective at temperatures below about -17°C are formed from a polyurethane-film forming composition. The film-forming composition further comprises a surfactant having a hydrophobic region and a hydrophilic region. -Appropriate selection of the number, length, and type, and relative ratio of hydrophilic to hydrophobic groups allows adjustment of the anti-frost properties of the layer. -Without being bound by theory, it is believed that such a structure allows a reduction in the interfacial tension between the surface of the layer and the condensing moisture, which enhances anti-frosting. Desirably the surfactant is also selected so as to not significantly adversely affect desirable physical properties of the polyurethane film, for example chemical resistance, scratch resistance, ultraviolet (UV) radiation resistance, and the like.

In addition, the surfactant comprises an isocyanate-reactive functionality. Such surfactants co-react to provide a polyurethane having the surfactant covalently bound and attached as a pendant group to the polyurethane polymer, or desirably, the surfactant attaches at the end of the polyurethane polymer. Suitable isocyanate-reactive functionalities include groups having an active hydrogen atom, for example a hydroxyl group, a carboxyl group, a primary or secondary amino group, or a sulfhydryl group. A compound having a combination comprising at least one of the foregoing types of groups may also be used.

Suitable surfactants comprising an isocyanate-reactive functionality and having a hydrophilic region and a hydrophobic region are disclosed, for example, in U.S. Patent No. 5,877,254 to LaCasse, and may be nonionic, anionic, cationic, amphiphilic, or a mixture of the foregoing types of surfactants. Suitable nonionic surfactants include ethoxylated or propoxylated alcohols, phenols, amides, and amines.

Suitable ionic surfactants include quaternary cationic surfactants as well as anionic surfactants, for example cationic or anionic surfactants having a non-ethoxylated hydrocarbon chain with greater than or equal to 16 carbon atoms.

A non-limiting list of examples of suitable anionic surfactants includes monoethanolamine salts of sulfonic acids, diethanolamine salts of sulfonic acids, triethanolamine salts of sulfonic acids and combinations comprising at least one of the foregoing.

Examples of hydroxyl-containing cationic-surfactants include, without limitation, ricinoleamidopropyl dimethylethyl ammonium ethylsulfate, (12-hydroxy-1-oxo-9-octadecenyl)amino)-N,N-dimethyl, ethyl sulfate (salt)); stearamidopropyl dimethylethanolammonium methyl sulfate, and octadecylmethol diethanolammonium chloride.

Typical anionic surfactants rarely contain free, reactive hydroxyl groups in their structure, and so may be made "hydroxyl bearing" by incorporating the free hydroxyl or other isocyanate-reactive groups in their countercation. Such modification can be accomplished by neutralizing a hydroxyl bearing quaternary ammonium base such a choline hydroxide with an acid such as dodecylbenzene sulfonic acid, as described in LaCasse. Other hydroxyl-bearing ammonium compounds include but are not limited to triethylethanol-, diethyldiethano-, and ethyltriethanolammonium salts. A non-limiting list of sulfonic acids from which the salts are prepared includes dodecylbenzene sulfonic acid, napthalene sulfonic acid, lignin sulfonic acids, petroleum sulfonic acids, and paraffin sulfonic acids. In this embodiment, the countercation becomes covalently bound to the polyurethane, and the anionic portion of the surfactant is associated with the polyurethane by virtue of the electrostatic attraction between the anion and countercation.

Combinations of reactive hydroxyl-bearing anionic and cationic surfactants are particularly useful, for example a combination of choline dodecylbenzene sulfonate with ricinoleamidopropyl ethyldimonium ethosulfate.

The surfactants may be used in concentrations of about 10% to about 40% by weight of total solids of the polyurethane-forming composition.

Formulations for the formation of polyurethane films generally include an isocyanate-containing component and an active hydrogen-containing component reactive with the isocyanate-containing component. Suitable isocyanate-containing components include, for example, hexamethylene diisocyanate, diphenylmethane diisocyanate, bis(methylcyclohexyl) diisocyanate and toluene diisocyanate. The isocyanate-containing component is a prepolymer, for example a biuret or an isocyanurate of a diisocyanate, e.g., a prepolymer of diisophorone diisocyanate. Combinations comprising at least one of the foregoing isocyanate-containing compounds may be used. Blocking of the isocyanate group, for example with an oxime or phenol, and later removal of the protective group prior to reaction is also contemplated. When blocked isocyanates are used, it is possible to use solvents or other compounds which, but for the protective group in the isocyanate, would react with and consume the isocyanate groups.

The isocyanate-containing component is reacted with a hydrophilic polyol, such as polyethylene glycol, ethylene glycol/propylene glycol copolymers, and combinations comprising at least one of the foregoing. Other suitable hydrophilic polyols include polybutylene glycol, polyethylene imine, amine-terminated polyethers, and certain polyester polyols. A combination of hydrophilic polyols may be used, for example, a polyethylene oxide/propylene oxide random triol having a weight average molecular weight of about 4,500 and containing approximately 70% by weight ethylene oxide combined with an ethylene oxide/propylene oxide block copolymer of weight average molecular weight about 2,100 and containing about 20% by weight ethylene oxide based upon a total weight of the polyols; e.g., 47% by weight of Visguard® Part A, 19% by weight of Visguard® part B (both commercially available from Film Specialties, Inc. Hillsborough, NJ), and 33% by weight of a solvent (comprising 75% by weight of butinol and 25% by weight of diacetone alcohol). Such a combination provides enhanced hydrophilicity to the polyurethane backbone without substantially compromising scratch-resistance or interfering with the incorporation of the surfactant.

The hydrophilic polyol may be present in the composition in amount of about 10% to about 35% by weight of the total solids, and specifically about 15% to about 65% by weight.

In practice, the isocyanate-containing component, active hydrogen-containing component, and reactive surfactant may be combined in a suitable organic solvent. The organic solvent may be a number of materials that do not react rapidly with isocyanates, including ketones, esters, glycol esters, and tertiary alcohols, as well as combinations comprising at least one of the foregoing. Minor amounts of inert diluents such as aliphatic hydrocarbons and esters may also be used. Water and alcohols may be used if commercially available blocked isocyanates are used. Other components may be present, for example UV inhibitors, stabilizers, and catalysts.

For example, in one manner of proceeding, a polyisocyanate prepolymer having free isocyanate groups is mixed with an organic solvent solution of a hydrophilic polyol and a hydroxyl-bearing surfactant having a hydrophilic region and a hydrophobic region. The mixture is then allowed to heat cure at appropriate temperatures, e.g. between about 20°C to and about 200°C for a sufficient amount of time, e.g., about five minutes to about 24 hours. Cure time and temperature will vary depending on the components and application.

The anti-frost layer is disposed on a substantially transparent film. The film is selected to provide support to the layer. The film may also be selected so as to provide the desired level of flexibility, adhesion between the anti-frost layer and the film (with or without an adhesive), adhesion between the film and substrate (with or without an adhesive), and/or the desired compatibility with an adhesive. As such the choice of film composition will vary depending on the desired properties, including flexibility and transferability as described below. Suitable film materials that may be made substantially transparent include, for example, polycarbonate, acrylic, vinyl, styrene-based films, polyvinylchloride, polybisallyl carbonate, polyethylene terephthalate, and substantially transparent polyethylene naphthenate, as well as combinations comprising at least one of the foregoing types of polymers. Various polyolefins or fluorinated polymers may also be used with appropriate pretreatments.

The surface of the film may be treated to improve adhesion of the anti-frost layer to the film, for example with an adhesive, by mechanical roughening, plasma treatment, chemical etching, an/or other known treatment(s).

The anti-frost layer can be disposed on the substantially transparent film by a variety of methods, for example casting, coating (e.g., wire wound rod coating, gravure coating, slot die coating, pan fed reverse roll coating, and nip fed coating), and the like. The technique is selected so as to provide a uniform and thick coating, e.g, a coating having a thickness of about 0.0001 to about 0.1 inches (about 2.5 to about 2,540 micrometers (µm)), more specifically about 0.001 to about 0.01 inches (about 25.4 micrometers to about 254 micrometers), even more specifically, about 0.003 to about 0.008 inches (about 76.2 micrometers to about 203 micrometers). Where an organic solvent is used, the solvent may be removed during or after cure by evaporation, for example in an oven, in a one- or two-stage process. Cure and solvent removal, in particular time, temperature, and airflow during cure and solvent removal, is optimized to provide a uniform coating with low temperature anti-frost properties.

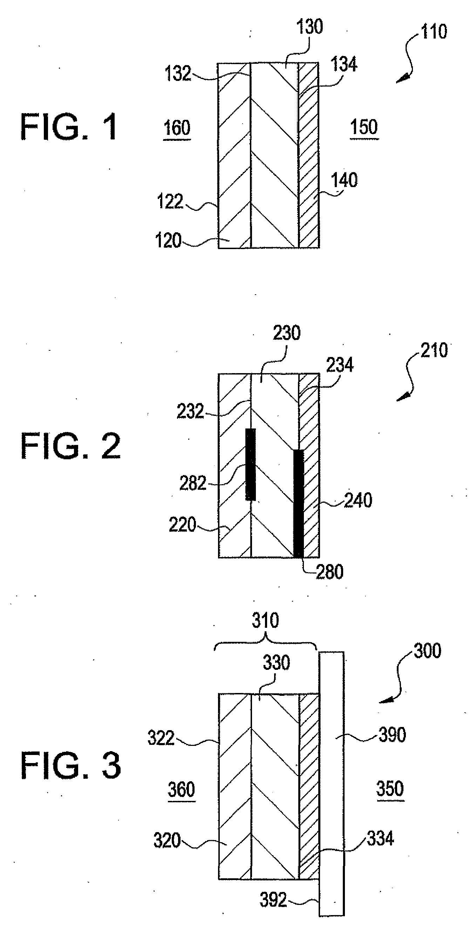

Several embodiments of anti-frost film assemblies and articles formed therefrom are described below with reference to individual drawing figures. In Figure 1, a schematic view of an anti-frost film assembly 110 is illustrated. Anti-frost film assembly 110 comprises an anti-frost layer 120 and a substantially transparent film 130 having a first surface 132 and second surface 134 opposite first surface 132. Anti-frost layer 120 is disposed on an area of first surface 132, that is, in physical communication with all or a portion of first surface 132, as determined by the desired application.

Anti-frost film assembly 110 further comprises an adhesive layer 140 for temporarily or permanently adhering the assembly to a substrate (not shown). Adhesive layer 140 allows for repositioning of anti-frost film assembly 110. Adhesive layer 140 is disposed on an area of second surface 134 of film 130. Exemplary adhesives for use with the anti-frost film assemblies include pressure sensitive adhesives, silicone adhesives, acrylic adhesives (including ultraviolet cured and thermally cured adhesives, wet applied and dry applied adhesives), rubber adhesives, heat-seal adhesives, laminating adhesives, high temperature adhesives, and/or other adhesives that will achieve the intended result. Wet-applied acrylic adhesives sometimes known as "window adhesives" are of particular utility. Desirably, the adhesive bonds to glass with a bond strength of greater than or equal to about 3 pounds force per linear inch (lb/in) (e.g., about 8 lb/in to about 10 lb/in). Some exemplary adhesives include National Starch and Chemical Duro-Tak 80-1070, Toyo Color America LLC, Oribain BPS5160.

With adhesive layer 140, anti-frost film assembly 110 is optically clear, providing visibility from an area 150, through adhesive layer 140, film 130, and anti-frost layer 120 to area 160.

In another embodiment, shown in Figure 2, an anti-frost film assembly 210 further comprises a graphic component 280 on second surface 234 of film 230 and/or a graphic component 282 on first surface 232 of film 230. In this embodiment, as shown, anti-frost layer 220 is disposed on an area of film 230 having a first surface 232 and second surface 234 opposite first surface 232. The graphic component(s) 280, 282 may be any of a variety of designs, including letters, words, numbers, aesthetic images, borders, symbols and/or the like. The graphic component(s) may be applied via any of a variety of techniques including screen printing, pad printing, sublimation, laser printing, digital offset printing, lithography, offset printing, ink jet printing, digital ink jet printing, digital offset printing, heat transfer printing, and so forth. Advantageously, graphic component(s) 280, 282 may enhance appearance and provide additional information including advertising, without significantly impairing visibility. As shown, an area of graphic component 280 and/or an area of second surface 234 is coated with an adhesive 240 to allow for repositioning and adherence of film assembly 210 to a substrate. A single graphic component may be disposed on a surface of film 230, or there may be more than one graphic component disposed on second surface 234 and/or on first surface 232.

As shown in Figure 3, an article 300 comprises an anti-frost film assembly 310 and a substrate 390. Second surface 334 is placed adjacent an area of a surface 392 of a substrate 390 so as to provide anti-frost layer 320 with an exposed surface 322 adjacent to an area 360. In use, exposed surface 322 is alternately exposed to a temperature as low as about -23°C, such that exposed surface 322 substantially does not frost when exposed to moist air equal to or greater than the surface temperature of exposed surface 322. Adhesive layer 340 is used to permanently or temporarily adhere anti-frost assembly 310 to substrate 390.

Suitable substrates include, but are not limited to, substantially transparent glass, plastic, and substitutes suitable for a desired application. Specific substrates include polycarbonate (e.g., LEXAN® from GE Advanced Materials), polyester (for example, poly(cyclohexanedimethanol terephthalate)-co-poly(ethylene terephthalate), abbreviated as PETG when the polymer comprises greater than or equal to about 50 mole% of poly(ethylene terephthalate), acrylic, polyvinylchloride, polybisallyl carbonate, polyethylene naphthenate, as well as combinations comprising at least one of the foregoing, e.g., polycarbonate/poly(1,4- cyclohexylene dimethylene 1,4-cyclohexanedicarboxylate) (also known as polycarbonate/PCCD) (e.g., XYLEX from GE Advance Materials).

As the applications may be varied, so is the selection of substrate. For instance, substrates considered suitable for a refrigerated door may be determined by the presence or absence of heating devices, type, and design of refrigeration unit, and proposed use and life span. The film assemblies are designed to be positioned in operational relation to a substrate and/or form a transferable, non-permanent bond at the surface of a substrate and provide at least a substantially nonfrosting area of the substrate surface. Therefore, the film assemblies are particularly suited for use in refrigerated units, including refrigerators and freezers. And, while reference is made to refrigerated units and components such as refrigerated doors throughout this disclosure, it is to be understood that the anti-frost films disclosed herein can be used in other applications without undue experimentation. Other applications include, for example, building windows (such as house windows), windshields of vehicles (such as cars, trucks, motorcycles, boats, airplanes, and the like), reflective surfaces (such as bathroom mirrors, automotive mirrors, and the like), scientific equipment (for example on the face of displays, gauges, and the like), face shields (for example medical face shields, sporting equipment face shields, and the like), and instrument surface..

The anti-frost film may be applied onto a substrate in a non-permanent fashion, or placed in operative relation to a substrate to provide anti-frost properties to the substrate without becoming permanently affixed to the substrate. Thus, the adhesive applied to the second surface of the film is selected so as to allow repositioning, transferability, and/or easy removal of the anti-frost film assembly. For example, the anti-frost film assembly may be wet applied so that the film can be repositioned until satisfactorily positioned, and form a bond upon drying. For example, a typical application includes applying a solution of about 99% or more of water and about 1% or less of soap to a room temperature substrate. Application of the solution onto the substrate surface may be by various methods, such as spraying the solution using an atomizer. The adhesive portion of the anti-frost film is placed against the solution-wet substrate. The film may be repositioned into satisfactory position, any air bubbles are squeezed out with a squeegee, and allowed to dry. In this manner, the anti-frost coating adheres to the surface of the substrate but the coating does not molecularly bond at its interface with the substrate. Alternatively, the anti-frost film assembly can be applied to the substrate by spraying the adhesive side of the film and applying this side, wet with solution, to the substrate.

As used herein the term "refrigerator panel" refers to any substrate used as a door or window for a refrigerated unit having an internal temperature less than or equal to about -10°C, or, more specifically less than or equal to about -17°C, and yet more specifically about -17°C to about -23°C. The internal temperature and temperature range will be determined by the application of the cooled unit, and the items the unit is designed to store, display and preserve. For instance, food, medical supplies, and transplant organs have refrigerated units and temperature requirements designed to serve the specific storage needs of these items.

When incorporated into existing refrigerated panels, prevention of frost formation between the anti-frost film and the glass is desirable. This frost formation can be inhibited using an installation solution that is applied between the glass and the film. The installation solution comprises about 50 volume percent (vol.%) to about 70 vol% water (e.g., deionized water), or, more specifically, about 60 vol% to about 70 vol% water; about 10 vol% to about 40 vol% alcohol (e.g., isopropyl alcohol), or, more specifically, about 20 vol% to about 30 vol% alcohol; about 2 vol% to about 8 vol% surfactant, or, more specifically, about 2 vol% to about 5 vol% wetting solution; and less than or equal to about 3 vol% salt (e.g., sodium chloride such as in the form of deionized salt, or another salt that readily dissolves in the solution), or, more specifically, about 0.5 vol% to about 2 vol% salt. The volume percent is based upon the total volume of the installation solution. Exemplary wetting solution include Madico 30-1-1 Window Solution Concentrate (WSC) (commercially available from Madico, Woburn, MA), Right-On (commercially available from Avery Dennison, Pasadena, CA), dishwashing liquid (e.g., Joy dishwashing liquid), as well as others.

For example, 1 liter of solution can be prepared by combining 23 ounces (oz.) water, 9 oz. isopropyl alcohol, 1.5 oz. Madico 30-1-1 WSC, and 1 tablespoon salt. This installation solution has enabled good optics through the film after installation on the glass, even when the glass is cold, e.g., 0°C.

In refrigerated units, the anti-frost film assembly may be used in conjunction with low-emissivity (low-E) glass or coatings. The low-E glass may be selected to meet two primary criteria: high reflective capability as to the infrared spectrum (thereby rejecting invisible radiant heat); and high visibility transmittance (so that is does not obscure or cloud visibility through it). There are a large number of glass materials having varying low-emissivity properties. Low-E glass and low-E coated glass or plastics as discussed herein are meant to refer to glasses or plastics that are designed not to emit (and thus reflect) radiation above about 0.7 micrometers, and more particularly about 0.7 to about 2.7 micrometers. Typically several layers are used to reflect greater percentage in the about 0.7 to about 2.7 micrometer range. The low-E surfaces or coatings may have visible transmittance of about 70% to about 90%.

The anti-frost film assemblies are useful for preventing condensation on substrates that are alternately held at temperatures of 0°C to -23°C, and then exposed to moist ambient air at temperatures of about 18°C to about 30°C for up to about 2 minutes. The relative humidity of ambient air is generally about 40 % to about 70%. As used herein "moist ambient air" refers to the temperatures and relative humidity within the ranges stated above that are most typically associated with the humid ambient conditions in a grocery store, convenience store, supermarket, or the like, or the area adjacent to a cooler (e.g., beverage cooler). Thus, in another embodiment, the anti-frost film assemblies prevent significant condensation on substrates that are alternately held temperature of about -17°C to about -23°C, then exposed to a temperature of about 20°C to about 25°C, specifically about 21°C to about 24°C, for up to about one minute, in the presence of air having a relative humidity of about 40% to about 50% at the temperature of about 20°C to about 25°C.

The fact that condensation is minimized or prevented at these low temperatures without use of external heaters represents a significant advance over the prior art. For example, approximately 1.4 amps are required to heat a refrigerated display door. Use of the above-described assemblies allows the owner to eliminate such heating. In a facility, e.g, a store, having about 100 to about 140 doors per store and about 120 volt power, this translates to about a 60 amp savings for the store owner. Heat is still applied to the doorframe but the majority of the heat can be turned off completely with the use of the film assemblies. Store owners and other users of refrigerated units can thus realize a significant energy savings.

The anti-frost filer and system are further illustrated by the following non-limiting examples.

### Example 1.

An anti-frost assembly comprising an anti-frost layer disposed on a polycarbonate film was manufactured using a polyurethane anti-frost layer formed from a composition comprising the formulation in the Table I below (% by volume).

| Table I | | |
|---|---|---|
| Visguard® * Part A: (FSI 106-94) | 47.6 % hydrophilic polyols | (10 parts by weight) |
| Visguard®* Part B: (FSI 106-94) | 19.1 % isocyanate prepolymer | (4 parts by weight) |
| Tertiary Butyl Alcohol: | 25.0% solvent | (5.25 parts by weight) |
| Diacetone Alcohol**: | 8.3% solvent | (1.75 parts by weight) |

| | | |
|---|---|---|
| *from Film Specialties, Inc. **4-hydroxy-4-methyl-2-pentanone | | |

A wire wound rod coating technique was used to apply the formulation to the film, and the film formulation was cured and the solvent removed in a chamber oven with active airflow to form a coating on the film. Coating thickness was 0.005 to 0.0065 inches (127 to 165 micrometers) and curing temperature was about 235°F (113°C) (between 230°F and 250°F (110°C to 121°C)) for 3 to 5 minutes. Fan speed was adjusted so that very low air flow (fan speed of about 500 revolutions per minute (rpm)) was present for the first 1 to 2 minutes of cure and high airflow (fan speed of about 1,500 rpm) was present for the last 2 to 3 minutes of cure. A high polish polyester mask (e.g., Dupont KL1, 1 mil mask) was used on the coated side of the polycarbonate.

The other side of the polycarbonate film was coated with a window film wet applied repositionable acrylic adhesive. The assembly was applied to a glass substrate by spraying the glass with a solution of 99% water/1% detergent, then pressing the adhesive of the assembly against the glass, squeezing out any air bubbles with a squeegee, and allowing to completely dry.

The anti-frost effectiveness of the assembly was tested by equilibrating the assembly and a window substrate for 2 hours prior to testing. Substrates with and without the anti-frost coating were then exposed to ambient conditions (21°C, 50% RH) for 60 seconds, and then returned to the indicated temperature. The window was then watched at an observer distance between 1 to 3 feet at a normal viewing angle under normal fluorescent lighting conditions and the time for the window to become frost free was recorded.

The results are shown in the Table II below. In each instance the substrate without the anti-frost coating showed condensation. Time for the condensation to clear was measured and is shown below.

| Table II | | |
|---|---|---|
| Surface Temperature, °F (°C) | Area containing anti-frost assembly remains clear with door opened and after closing | Time for comparative surface to clear after opening, minutes: seconds |
| 30 (-1.1) | yes | 1:30 |
| 25 (-3.9) | yes | 1:30 |
| 20 (-6.7) | yes | 1:30 |
| 15 (-9.4) | yes | 1:30 |
| 10 (-12.2) | yes | 2:30 |
| 5 (-15) | yes | 3:30 |
| 0 (-17.8) | yes | 3:45 |
| -5 (-20.6) | yes (snowflakes in one corner)* | 6:30 |
| -10 (-23.3) | yes (snowflakes in one corner)* | 6:00 |
| -15 (-26.1) | ice formed in some areas | 6:00 |
| -20 (-28.9) | frost on glass and film | - |

| | | |
|---|---|---|
| *Snowflakes were formed on areas of contamination and therefore are not considered failures | | |

As may be seen from the above data, the surface area of a substrate at a temperature of about 0°C to about -23°C with the anti-frost assembly remains clear and substantially without frosting. The anti-frost film assemblies disclosed herein therefore allow a refrigerator door to be opened and closed throughout the course of the day, substantially without frosting when exposed to moist air equal to or greater than the surface temperature of the substrate, and thus not obscuring the view of the items within the refrigerated unit.

### Example 2.

The above described antifrosting film assembly was applied to refrigeration units in an actual grocery store. The refrigeration units were set at -29°C, the air temperature inside the unit was -23°C and the air in the store was 21°C to 24°C at 40 to 50% RH. Under these conditions there was no frosting observed on doors with the anti-frost material applied, even after 1 minute of being opened. Doors without the anti-frost material frosted within 10 to 15 seconds. No difference was seen between doors that were heated and had the anti-frost film assembly and those that were not heated and had the anti frost film assembly. This would allow the average store with 100 to 140 doors to run without heated doors and save approximately 60 amps for the store.

### Example 3.

Anti-frost film assemblies were produced utilizing various masking film materials for the purpose of evaluating the effect of masking film surface finish and material. Haze values and frost times (i.e., duration until panel frosted, measured in seconds) were evaluated for three masking films: polyethylene masking film comprising a smooth surface (Smooth PE), polyethylene masking film comprising a fine textured surface (Fine Texture PE), and a polyester masking film comprising a smooth surface (Smooth PET). Haze was measured utilizing ASTM D1003 and time to frost was evaluated at an observer distance of 1 to 3 feet at a normal viewing angle under normal fluorescent lighting conditions.

| Table III | | | |
|---|---|---|---|
| | Masking Film Material | | |
| | Smooth PE | Fine Texture PE | Smooth PET |
| Average Haze (%) | 0.62 | 1.09 | 0.66 |
| Average Time to Frost (seconds) | 27 | 20 | >120 |

From the data generated, it can be seen that the smooth polyester masking film (Smooth PET) produced the optimal frost resistance from the samples tested. In addition, comparing the Smooth PE to the Fine Texture PE masking films, it is shown that the fine textured surface on the Fine Texture PE sample produces a shorter time to frost duration. Further, the Fine Texture PE sample exhibits higher haze compared to the Smooth PE sample.

### Example 4.

Presented in Table IV below are experimental results from an experiment conducted for the purpose of evaluating the effects of cure time, fan speed, and film thickness on appearance and frost resistance. Appearance was measured at an observer distance of 1 to 3 feet at a view angle of 45° under normal fluorescent lighting conditions.

| Table IV | | | | |
|---|---|---|---|---|
| Time to Cure (seconds) | Fan Speed (rpm) | Film Thickness (mils (µm)) | Appearance | Time to Frost* (min) |
| 75 | 500 | 7 (178) | Orange Peel | <2 |
| 75 | 1,500 | 7 (178) | Orange Peel | <2 |
| 105 | 1,500 | 7 (178) | Orange Peel | <2 |
| 105 | 500 | 7 (178) | Good | >2 |
| 105 | 500 | 20 (508) | Good | >2 |
| 105 | 1,500 | 20 (508) | Orange Peel | <2 |
| 75 | 500 | 20 (508) | Orange Peel | <2 |
| 75 | 1,500 | 20 (508) | Orange Peel | <2 |
| 75 | 500 | 7 (178) | Orange Peel | <2 |
| 75 | 1,500 | 7 (178) | Orange Peel | <2 |
| 105 | 500 | 20 (508) | Good | >2 |
| 105 | 1,500 | 20 (508) | Orange Peel | <2 |

| | | | | |
|---|---|---|---|---|
| *Time to Frost in less than (<) or greater than (>) 2 minutes (min) | | | | |

From the data presented above, it can be seen that shorter cure times (e.g., less than 1.25 minutes) combined with high fan speeds and non-polished masks can result in time to frost values of less than 2 minutes. The surface finish of these articles was mottled, having an orange peel appearance. When longer cure times (e.g., greater than 1.5 minutes) were employed in combination with lower fan speeds, the articles produced exhibited good surface appearance and time to frost values were increased to greater than 2 minutes. Hence, a fan speed of less than or equal to about 1,000 rpm, or, more specifically, less than or equal to about 750 rpm, or, more specifically, less than or equal to about 500 rpm, can be employed to attain good appearance as well as time to frost of greater than 2 minutes. Additionally, cure times of great than or equal to about 1.5 minutes, or, more specifically, greater than or equal to about 1.75 minutes are desireable to attain the good appearance and the longer time to frost, e.g., at a film thicknesses of less than or equal to about 1,000 µm, or, more specifically, about 180 µm to about 510 µm.

The present anti-frost layer was used on a freezer door that had previously employed glass heaters to avoid frosting. The freezer was set for -25°C (-13°F) and -18°C (0°F). As is evident from Table V, energy consumption reduced by greater than 40%. Prior to starting the tests A TES-3600 unit was attached to the inlet power cord for the freezer and the single phase 3 wire set up was used to measure the energy used by the system over time. In each set of tests the first test was conducted with the door heaters plugged in to establish the total energy usage of the system. The freezer contained 18 five gallon water bottles to create a thermal mass in the freezer (3 on each shelf). Subsequent tests of the set were conducted with the door heaters disconnected from the freezer's system. A set of tests were conducted at the minimum possible setting for the freezer (-13°F set -5 to -8°F measured) and with the freezer set for 0°F. The doors were left closed during all tests.

**Table V shows the results for a chamber temperature of -8°F (-22°C). As can be seen from Table V, the reduction in energy usage was greater than 40%, and averaged 43% with a standard deviation of 1%.**

| Table V | | | | | |
|---|---|---|---|---|---|
| | Door Heaters | Elapsed Time (hrs.) | Cumulative Energy Measurement (kWh*) | Avg. Energy Usage per hour (kWh) | Reduction In Energy Usage |
| 1 | on | 1.0 | 0.761 | 0.761 | |
| 2 | off | 1.9 | 0.827 | 0.440 | 42.2% |
| 3 | off | 1.3 | 0.554 | 0.432 | 43.3% |
| 4 | off | 1.0 | 0.423 | 0.423 | 44.4% |
| *kWh = kilowatt hours | | | | | Avg. 43% |

**Table VI shows the results for a Chamber temperature of 0°F (-18°C). As can be seen from Table VI, the reduction in energy usage was greater than 40%, and even greater than or equal to about 43% reduction compared to a freezer with a door heater on.**

| Table VI | | | | | |
|---|---|---|---|---|---|
| | Door Heaters | Elapsed Time (hrs.) | Cumulative Energy Measurement (kWh*) | Avg. Energy Usage per hour (kWh) | Reduction In Energy Usage |
| 5 | on | 5.0 | 3.74 | 0.742 | |
| 6 | off | 2.1 | 0.848 | 0.410 | 45% |

The film was also tested to assess the performance of the film mounted on glass freezer doors (a 3 door freezer) through three standard food distribution industry specifications:
1. 30 seconds (sec) door open: 1 cycle
2. 20 sec door open and close: 10 cycles
3. 900 sec door open and close: 1 cycle

As used in the following Tables VI and VII, sheathing refers to when sheathing moisture began, droplets at " " sec refers to when droplets formed on the door, and w/d refers to with droplets.

| Freezer 0°F Chamber 75°F | Test Type 1 Door Open 30 Sec 1 cycle | | Test Type 2 Door Open & Closed 20 Sec 10 cycles | | Test Type 3 Door Open 900 Sec 1 cycle | |
|---|---|---|---|---|---|---|
| | During Cycle | After Cycle | During Cycle | After Cycle | During Cycle | After Cycle |
| With Film (50% RH) | Clear throughout | Clear throughout | Clear throughout | Clear throughout | Moisture appeared on middle door at 240 sec | At door closing, center door has a slight frost with the other two doors mostly clear. Clear w/d at 240 sec. |
| Without Film (50% RH) | All doors frosted | All doors clear at 180 sec | All doors frosted in the first cycle. Sheathing started in 4^{th} cycle. Droplets on center door in 6^{th} cycle. | Mostly clear after 180 sec. Clear w/d at 300 sec | Frosting on all doors starts almost immediately. Sheathing on all doors at 60 sec. | At door closing, frost is still clearing in all doors and all are sheathing. Clear w/d at 180 sec. |
| With Film (55% RH) | Minor frost on center door | Clear with drips in 60 sec. | Frost formed on the center door 1^{st} cycle. Sheathing on the center door in the 6^{th} cycle | Center door clear after 900 sec | Frost appears on the left door at 120 sec. Sheathing on center door at 240 sec. Droplets on left door at 360 sec. | At door closing center and left doors are sheathing; right door is clear. Clear w/d at 540 sec. |
| With Film (60% RH) | No frost; condensate droplets formed | Clears with drips in 60 sec | Frosting started in 5^{th} cycle on the left door. Sheathing on the center door started in 5^{th} cycle. | Mostly clear after 60 sec. Clear w/d at 120 sec. | Moisture appeared on middle door at 240 sec. frosting appeared on the right door at 360 sec. | At door closing, each door has moisture droplets on the inside surface. Clear with droplets at 540 sec. |
| Without Film (60% RH) | All doors frosted | All doors clear at 240 sec | All doors frosted in the first cycle. Sheathing in 5^{th} cycle on two doors and the third in 7^{th} cycle. | Mostly clear after 180 sec. Clear w/d at 360 sec. | Frosting on all doors starts almost immediately. Sheathing on all doors at 60 sec; droplets at 180 sec | At door closing, frost is still clearing in all doors and all are sheathing. Clear w/d at 180 sec. |
| With Film (45% RH) | Minor frost on center door | All doors clear at 120 sec. | Center door started frosting in the 1^{st} cycle. Sheathing on the center door started in 6^{th} cycle. | Mostly clear after 540 sec. Clear at 660 sec. | Minor frosting on center door almost immediately. Sheathing on center door at 240 sec; droplets at 180 sec. | At door closing, center door sheathing. Clear w/d at 420 sec. |
| Without Film (45% RH) | All doors frosted | All doors clear w/d at 240 sec | All doors frosted in the first cycle; 2 remaining frosted throughout cycle. Sheathing on center door in 4^{th} cycle. | Mostly clear after 360 sec. Clear at 420 sec | Frosting on all doors starts almost immediately. Sheathing on center door at 60 sec. | At door closing, left and right doors frosted and sheathing. Center door is mostly clear. Clear w/d at 300 sec. |
| With Film (60% RH) | Clear throughout | Clear throughout | Sheathing on the center door started in 6^{th} cycle. | Clear with droplets at 180 sec. | Center door sheathing starts at 120 sec. Left door starts to frost at 480 sec. | Left and center door start to clear at 540 sec and are clear with droplets at 840 sec. Right door is clear throughout test. |
| With Film (60% RH) Door Heaters On | Clear throughout | Clear throughout | Sheathing on center door in 6^{th} cycle. | Clear w/d at 180 sec. | Sheathing on center door at 120 sec; droplets at 180 sec | At door closing, center and left door are sheathing. Right door is clear. Clear w/d at 780 sec. |
| Without Film (60% RH) | All doors frosted. | Clear w/d at 240 sec. | Frosting on left and center door in first cycle | Mostly clear after 240 sec. | All doors frosted within 60 sec. Center door sheathing after 120 sec. | Clear with droplets at 300 sec. |

In each of the tests performed the film slowed or reduced the onset of door frosting when the door was opened. On the 900 second door open test at higher surrounding humidity values significant frosting, sheathing of moisture, and condensate droplets formed on both the film and non-film doors. In these cases of significant condensation forming the films took a slightly longer time than the heated non-filmed doors to come clear.

As disclosed herein, substantially transparent, multilayer films useful in the production of condensation-resistant articles (such as refrigerator and freezer doors and panels, bathroom mirrors, and the like), offer effective frost-resistance to temperatures below previously attainable, as low as about -17°C, or even as low as -23°C. Furthermore, these films offer effective frost resistance without use of external heaters, which are common in glass freezer door applications. This results in a significant savings in energy costs. In addition, articles produced from these films can be retrofit into many applications and/or assembled to existing articles, offering merchants several anti-frost solutions (e.g., adhesion coating can be put on the film In an advantageous optional feature, the assemblies are manufactured to be repositionable and/or allow the inclusion of a graphic.

The anti-frost film assembly can comprise: a substantially transparent film having a first surface and a second surface opposite the first surface; and a substantially transparent anti-frost layer formed from a polyurethane-film forming composition effective to provide the layer with anti-frost properties at temperatures that alternate between -23°C and 65°C, wherein the anti-frost layer is disposed on an area of the first surface of the film. The polyurethane-forming film composition can further comprises a surfactant having an isocyanate-reactive moiety, a hydrophobic region, and a hydrophilic region. The surfactant can comprise a combination of a cationic surfactant and an anionic surfactant. The isocyanate-reactive moiety of the surfactant can be a hydroxyl group.

The polyurethane-forming film composition comprises a polyisocyanate prepolymer having reactive isocyanate groups, a hydrophilic polyol, and a hydroxyl-bearing surfactant having a hydrophilic region and a hydrophobic region. The surfactant can be a cationic surfactant having the hydroxyl group covalently bound to the surfactant.

The anti-frost film assembly can further comprise an adhesive disposed on an area of the second surface of the film, wherein the adhesive allows the assembly to be repositioned on a substrate.

Also disclosed is a condensation-resistant article comprising a substantially transparent substrate having a first surface; and the anti-frost film assembly, wherein the second surface of the film is disposed on an area of the first surface of the substrate. The substrate can be a mirror or a vehicle windshield.

The method of producing an anti-frost film assembly can comprise: applying a substantially transparent anti-frost layer formed from a polyurethane-film forming composition to a first surface of a film; and applying an adhesive to a second surface of the film; wherein the substantially transparent anti-frost layer is effective to provide the layer with anti-frost properties at temperatures that alternate between -23°C and 65°C. The method can further comprise applying a graphic component onto one side of the adhesive. The method can further comprising applying the anti-frost film assembly onto a substrate wherein the adhesive is in contact with the substrate.

The terms "first," "second," "outer", "internal," "external," and the like as used herein do not denote any order, quantity, or importance, but rather are used to distinguish one element from another, and the terms "a" and "an" as used herein do not denote a limitation of quantity, but rather denote the presence of at least one of the referenced item. Furthermore, all ranges directed to the same property or quantity are inclusive and independently combinable. Reference throughout the specification to "one embodiment", "another embodiment", "an embodiment", and so forth, means that a particular element (e.g., feature, structure, and/or characteristic) described in connection with the embodiment is included in at least one embodiment of the present invention. Thus, the element(s) are not necessarily all referring to the same embodiment, and particular elements may be combined in any suitable manner in the various embodiments. If ranges are disclosed, the endpoints of all ranges directed to the same component or property are inclusive and independently combinable.

## Claims

1. An anti-frost film assembly for preventing condensation on a substrate comprising:
a transparent film having a first surface and a second surface opposite the first surface; and
a transparent anti-frost layer formed from a polyurethane-film forming composition effective to provide the layer with anti-frost properties when said substrate is alternatively held between -23°C and 0°C and then exposed to ambient air with a relative humidity of 40% to 70% at temperatures of 18 ºC to 30 ºC for up to 2 minutes, wherein the anti-frost layer is disposed on an area of the first surface of the film;
wherein the polyurethane-film forming composition comprises a polyisocyanate prepolymer having reactive isocyanate groups, a hydrophilic polyol, and a hydroxyl-bearing surfactant having a hydrophilic region and a hydrophobic region;
an adhesive layer disposed on an area of the second surface of the transparent film,
wherein said anti-frost assembly, with said adhesive layer, is optically clear, and wherein said adhesive layer allows the anti-frost film assembly to be repositioned on the substrate.

2. The anti-frost film assembly of Claim 1, wherein the film is selected from the group consisting of a polycarbonate, a polyester, a poly(cyclohexanedimethanol terephthalate)-co-poly(ethylene terephthalate), an acrylic, a polyvinylchloride, a polybisallyl carbonate, a polyethylene naphthenate, a polycarbonate/PCCD blend, and a combination comprising at least one of the foregoing polymers.

3. The anti-frost film assembly of Claim 1, further comprising a graphic component.

4. The anti-frost film assembly of Claim 3, wherein the graphic component is disposed on an area of the anti-frost layer, between the anti-frost layer and the first surface of the film, on an area of the first surface of the film, or on an area of the second surface of the film.

5. A condensation-resistant article comprising:
a transparent substrate having a first surface; and
the anti-frost film assembly of Claim 1, wherein the second surface of the film is disposed on an area of the first surface of the substrate.

6. The article of Claim 5, wherein the anti-frost film assembly further comprises a graphic component.

7. The article of Claim 5, wherein the article is a refrigerator panel, a reflective surface, an instrument surface, a window, or a face shield.

8. The article of Claim 7, wherein the substrate is a refrigerator door or a refrigerator window.

9. The article of Claim 5, wherein an installation solution was applied between the anti-frost film and the substrate, and wherein the installation solution comprises a solution of 99% or more of water and 1% or less of soap.

10. The article of claim 5, wherein the anti-frost layer has a thickness of 2.5 to 2,540 µm.

11. A method of producing an anti-frost film assembly useful for preventing condensation on a substrate comprising:
applying a transparent anti-frost layer formed from a polyurethane-film forming composition to a first surface of a transparent film;
wherein the polyurethane-film forming composition comprises a polyisocyanate prepolymer having reactive isocyanate groups, a hydrophilic polyol, and a hydroxyl-bearing surfactant having a hydrophilic region and a hydrophobic region;
and
applying an adhesive layer across a second surface of the film, said adhesive layer being selected so that said anti-frost assembly, with said adhesive layer, is optically clear and wherein said adhesive layer allows the anti-frost film assembly to be repositioned on a substrate;
wherein the transparent anti-frost layer is effective to provide the layer with anti-frost properties when the substrate is held at temperatures that alternate between -23°C and 0°C and then exposed to ambient air with a relative humidity of 40% to 70% at temperatures of 18 ºC to 30 ºC for up to 2 minutes.

12. The method of Claim 11, further comprising forming the anti-frost layer, wherein the anti-frost layer is formed using a fan speed of less than or equal to 1,000 rpm, and a cure time of greater than or equal to 1.5 minutes.

13. A method of forming an anti-frost article, comprising:
placing the anti-frost assembly of Claim 11 onto a solution-wet substrate or spraying an adhesive side of the film with solution and applying the adhesive side to the substrate; and
squeezing out air bubbles.

## Patentansprüche

1. Frostschutzfolienanordnung zum Verhindern von Kondensation auf einem Träger, aufweisend:
einen transparenten Film, der eine erste Fläche und eine der ersten Fläche gegenüberliegende zweite Fläche aufweist; und
eine transparente Frostschutzschicht, die aus einer einen Polyurethanfilm bildenden Zusammensetzung ausgebildet ist, die effektiv ist, um die Schicht mit Frostschutzeigenschaften zu versehen, wenn der Träger abwechselnd zwischen -23°C und 0°C gehalten wird, und dann einer Umgebungsluft mit einer relativen Feuchte von 40 bis 70 % bei Temperaturen von 18°C bis 30°C ausgesetzt wird, und zwar für bis zu zwei Minuten Dauer, wobei die Frostschutzschicht auf einem Bereich der ersten Fläche des Films angeordnet ist; wobei die den Polyurethanfilm bildende Zusammensetzung beinhaltet: ein Polyisocyanat-Präpolymer mit reaktiven Isocyanat-Gruppen, ein hydrophiles Polyol, und ein Hydroxyl-Gruppen enthaltendes Tensid, das einen hydrophilen Bereich und einen hydrophoben Bereich aufweist;
eine Klebeschicht, die auf einem Bereich der zweiten Fläche des transparenten Films angeordnet ist, wobei die Frostschutzanordnung mit der Klebeschicht optisch durchsichtig ist, und wobei die Klebeschicht ermöglicht, dass die Frostschutzfolienanordnung auf dem Träger neu positioniert wird.

2. Frostschutzfolienanordnung nach Anspruch 1, wobei der Film aus der Gruppe gewählt ist, die besteht aus: einem Polycarbonat, einem Polyester, einem Poly(cyclohexandimethanol-therephthalat)-co-poly(ethylen-terephthalat), einem Acrylharz, Polyvinylchlorid, Polybisallyl-carbonat, Polyethylen-naphthenat, einem Polycarbonat/PCCD-Gemisch, und einer Kombination, die mindestens eines der vorhergehenden Polymere beinhaltet.

3. Frostschutzfolienanordnung nach Anspruch 1, die weiter einen graphischen Bestandteil aufweist.

4. Frostschutzfolienanordnung nach Anspruch 3, wobei der graphische Bestandteil auf einem Bereich der Frostschutzschicht, zwischen der Frostschutzschicht und der ersten Fläche des Films, auf einem Bereich der ersten Fläche des Films, oder auf einem Bereich der zweiten Fläche des Films angeordnet ist.

5. Kondensationsresistenter Artikel, aufweisend:
einen transparenten Träger, der eine erste Fläche aufweist; und 2
die Frostschutzfolienanordnung nach Anspruch 1, wobei die zweite Fläche des Films auf einem Bereich der ersten Fläche des Trägers angeordnet ist.

6. Artikel nach Anspruch 5, wobei die Frostschutzfolienanordnung weiter einen graphischen Bestandteil aufweist.

7. Artikel nach Anspruch 5, wobei der Artikel ein Kühlschrank-Paneel, eine Reflexionsfläche, eine Instrumentenfläche, ein Fenster oder ein Gesichtsschutz ist.

8. Artikel nach Anspruch 7, wobei der Träger eine Kühlschranktür oder ein Kühlschrankfenster ist.

9. Artikel nach Anspruch 5, wobei eine Installationslösung zwischen die Frostschutzfolie und den Träger aufgebracht wurde, und wobei die Installationslösung eine Lösung aus 99 % o-der mehr an Wasser und 1 % oder weniger an Seife enthält.

10. Artikel nach Anspruch 5, wobei die Frostschutzschicht eine Dicke von 2,5 bis 2,540 um hat.

11. Verfahren zur Herstellung einer Frostschutzfolienanordnung, die für ein Verhindern einer Kondensation auf einem Träger nützlich ist, umfassend:
Aufbringen einer transparenten Frostschutzschicht, die aus einer einen Polyurethanfilm bildenden Zusammensetzung ausgebildet ist, auf eine erste Fläche eines transparenten Films; wobei die den Polyurethanfilm bildende Zusammensetzung aufweist: ein Polyisocyanat-Präpolymer mit reaktiven Isocyanat-Gruppen, ein hydrophiles Polyol, und ein Hydroxyl-Gruppen enthaltendes Tensid, das einen hydrophilen Bereich und einen hydrophoben Bereich aufweist; und
Aufbringen einer Klebeschicht über eine zweite Fläche des Films, wobei die Klebeschicht so gewählt ist, dass die Frostschutzanordnung mit der Klebeschicht optisch durchsichtig ist und wobei die Klebeschicht ermöglicht, dass die Frostschutzfolienanordnung auf einem Träger neu positioniert wird;
wobei die transparente Frostschutzschicht effektiv ist, um die Schicht mit Frostschutzeigenschaften zu versehen, wenn der Träger auf Temperaturen gehalten wird, die zwischen -23°C und 0°C abwechseln, und dann einer Umgebungsluft mit einer relativen Feuchte von 40 bis 70 % bei Temperaturen von 18°C bis 30°C ausgesetzt wird, und zwar für bis zu zwei Minuten Dauer.

12. Verfahren nach Anspruch 11, das weiter ein Ausbilden der Frostschutzschicht umfasst, wobei die Frostschutzschicht unter Verwendung einer Gebläsedrehzahl von 1000 U/min oder weniger, und einer Aushärtezeit von 1,5 Minuten oder mehr ausgebildet wird.

13. Verfahren zur Ausbildung eines Frostschutzartikels, umfassend:
Platzieren der Frostschutzanordnung nach Anspruch 11 auf einem mit Lösung befeuchteten Träger oder Besprühen einer Kleberseite der Folie mit Lösung und Aufbringen der Klebeseite auf den Träger; und
Herausdrücken von Luftblasen.

## Revendications

1. Un ensemble de film antigivre pour prévenir la condensation sur un substrat, comprenant :
un film transparent ayant une première surface et une seconde surface opposée à la première surface ; et
une couche transparente antigivre formée à partir d'une composition formant un film polyuréthane efficace pour conférer à la couche des propriétés antigivre lorsque ledit substrat est alternativement maintenu entre - 23 °C et 0 °C puis est exposé à l'air ambiant ayant une humidité relative de 40 % à 70 % à des températures de 18 °C à 30 °C pendant une durée allant jusqu'à 2 minutes, la couche antigivre étant disposée sur une zone de la première surface du film ;
dans lequel la composition formant un film polyuréthane comprend un prépolymère de polyisocyanate ayant des groupes isocyanate réactifs, un polyol hydrophile, et un agent tensio-actif porteur d'hydroxyle ayant une région hydrophile et une région hydrophobe ;
une couche adhésive disposée sur une zone de la seconde surface du film transparent ;
dans lequel ledit ensemble antigivre, avec ladite couche adhésive, est optiquement clair et dans lequel ladite couche adhésive permet le repositionnement de l'ensemble de film antigivre sur le substrat.

2. Ensemble de film antigivre selon la revendication 1, dans lequel le film est choisi dans le groupe constitué d'un polycarbonate, d'un polyester, d'un poly(téréphtalate de diméthanol-cyclohexane)-co-poly(téréphtalate d'éthylène), d'une résine acrylique, d'un chlorure de polyvinyle, d'un poly bis(allyl carbonate), d'un naphténate de polyéthylène, d'un mélange ρolycarbonate/PCCD, et d'une combinaison comprenant au moins l'un des polymères précédents.

3. Ensemble de film antigivre selon la revendication 1, comprenant en outre un composant graphique.

4. Ensemble de film antigivre selon la revendication 3, dans lequel le composant graphique est disposé sur une zone de la couche antigivre, entre la couche antigivre et la première surface du film, sur une zone de la première surface du film, ou sur une zone de la seconde surface du film.

5. Article résistant à la condensation comprenant :
un substrat transparent ayant une première surface ; et
l'ensemble de film antigivre selon la revendication 1, dans lequel la seconde surface du film est disposée sur une zone de la première surface du substrat.

6. Article selon la revendication 5, dans lequel l'ensemble de film antigivre comprend en outre un composant graphique.

7. Article selon la revendication 5, dans lequel l'article est un panneau de réfrigérateur, une surface réfléchissante, une surface d'un instrument, une vitre ou une visière de protection.

8. Article selon la revendication 7, dans lequel le substrat est une porte de réfrigérateur ou une vitre de réfrigérateur.

9. Article selon la revendication 5, dans lequel une solution d'installation est appliquée entre le film antigivre et le substrat, et dans lequel la solution d'installation comprend une solution à 99 % ou plus d'eau et à 1% ou moins de savon.

10. Article selon la revendication 5, dans lequel la couche antigivre a une épaisseur comprise entre 2,5 et 2,540 µm.

11. Procédé de production d'un ensemble de film antigivre utile pour prévenir la condensation sur un substrat, comprenant :
l'application d'une couche transparente antigivre formée à partir d'une composition formant un film polyuréthane sur une première surface d'un film transparent ;
dans lequel la composition formant un film de polyuréthane comprend un prépolymère de polyisocyanate ayant des groupes isocyanate réactifs, un polyol hydrophile, et un agent tensio-actif porteur d'hydroxyle ayant une région hydrophile et une région hydrophobe ;
et
l'application d'une couche adhésive sur une deuxième surface du film, ladite couche adhésive étant choisie de telle sorte que ledit ensemble antigivre, avec ladite couche adhésive, est optiquement clair, et ladite couche adhésive permet le repositionnement de l'ensemble de film antigivre sur un substrat ;
dans lequel la couche transparente antigivre est efficace pour conférer à la couche des propriétés antigivre lorsque le substrat est maintenu à des températures qui alternent entre - 23 °C et 0 °C puis est explosé à l'air ambiant ayant une humidité relative de 40 % à 70 % à des températures de 18 °C à 30 °C pendant une durée allant jusqu'à 2 minutes.

12. Procédé selon la revendication 11, lequel comprend en outre la formation de la couche antigivre, la couche antigivre étant formée en utilisant une vitesse de ventilateur inférieure ou égale à 1 000 t/min et un temps de durcissement supérieur ou égal à 1,5 minute.

13. Procédé de formation d'un article antigivre comprenant :
la mise en place de l'ensemble antigivre de la revendication 11 sur un substrat humidifié par une solution ou la pulvérisation d'une face adhésive du film avec une solution et l'application de la face adhésive sur le substrat ; et
l'élimination des bulles d'air.
